# EUROPÄISCHE PATENTSCHRIFT

(11) **EP 3 004 685 B1**
(45) Veröffentlichungstag und Bekanntmachung des Hinweises auf die Patenterteilung: **26.07.2017**
(21) Anmeldenummer: 14726136.6
(22) Anmeldetag: 22.05.2014
(51) Int. Cl.: F16F 15/00

(54) **VERFAHREN ZUM BETREIBEN VON GEMEINSAM AUF EINEM BODEN ANGEORDNETEN SIEBMASCHINEN MIT BEWEGLICHEN SIEBEN**
METHOD FOR OPERATING SCREENING MACHINES COMPRISING MOVING SCREENS AND ARRANGED ON A COMMON FLOOR
PROCÉDÉ PERMETTANT DE FAIRE FONCTIONNER DES MACHINES DE CRIBLAGE DISPOSÉES SUR UN TERRAIN COMMUN ET POURVUES DE CRIBLES MOBILES

(30) Priorität: 24.05.2013 EP 13169177
(43) Veröffentlichungstag der Anmeldung: 13.04.2016
(73) Patentinhaber: BASF SE, 67056 Ludwigshafen am Rhein (DE)
(72) Erfinder: STEPHAN, Oskar, 68766 Hockenheim (DE); ROSENBERGER, Thomas, 67308 Lautersheim (DE)
(86) Internationale Anmeldenummer: PCT/EP2014/060520
(87) Internationale Veröffentlichungsnummer: WO 2014/187891

(56) Entgegenhaltungen:
- EP-A2- 0 834 984
- US-A- 5 221 185
- US-A- 5 789 678
- US-A- 6 135 682

## Beschreibung

Die Erfindung betrifft ein Verfahren zum Betreiben von gemeinsam auf einem Boden eines Gebäudes angeordneten schwingenden und/oder taumelnden Siebmaschinen mit beweglichen Sieben wobei diese periodisch mit im Wesentlichen gleicher Frequenz bewegt werden.

Ein Beispiel für eine solche Maschine ist eine Taumelsiebmaschine. Eine Taumelsiebmaschine umfasst einen Siebaufbau mit einem oder mehreren Sieben, die übereinander angeordnet sind. Ein Sieb des Siebaufbaus wird hierbei auch Siebdeck genannt, wobei typische Taumelsiebmaschinen zwischen einem und sechs Siebdecks aufweisen. Das zu siebende Material wird von oben auf den Siebaufbau gegeben, und durchläuft diesen, wobei die verbleibende Materialfraktion mit jedem durchlaufenen Siebdeck feiner wird und die gröberen Fraktionen nach und nach abgetrennt werden. Die Bewegung des Materials durch den Siebaufbau wird dabei durch das Bewegen des Siebaufbaus unterstützt. Bei Taumelsiebmaschinen wird der Siebaufbau dazu auf einem Gestell montiert und über einen Motor in Bewegung versetzt. Der Siebaufbau ist dabei so auf dem Gestell angeordnet, dass dieser über einen Exzenter mit einer vom Motor angetriebenen Drehachse verbunden ist. Durch den Exzenter entsteht ein Versatz zwischen der Drehachse und der Symmetrieachse des Siebaufbaus. Zusätzlich kann das Gestell so ausgeführt sein, dass sich der Siebaufbau in Bezug auf die Drehachse neigen lässt. Der Siebaufbau wird durch diese Anordnung zu einer taumelnden Bewegung gezwungen, wenn die Drehachse angetrieben wird. Die Bewegung ist periodisch, wobei eine Periodendauer der Zeitspanne einer Umdrehung der Drehachse entspricht. Das zu siebende Material führt dabei eine elliptische Bewegung aus, ausgehend von der Mitte des Siebaufbaus, an der das Material aufgegeben wird. Die Verweilzeit des Materials im Siebaufbau kann dabei durch Verstellen des Exzenters und des Neigungswinkels des Siebaufbaus eingestellt werden.

Derartige Taumelsiebmaschinen sind zum Beispiel aus der DE 199 00 905 C1 bekannt. Die dort beschriebene Taumelsiebmaschine umfasst eine über einen Motor rotierbare Grundplatte und eine drauf angeordnete, in ihrem Neigungswinkel verstellbare Fußplatte. Die Fußplatte kann über weitere Verstellmittel gegenüber der Grundplatte verschoben werden. An der Fußplatte ist ein Schiefzapfen angeordnet, der drehbar mit einem durch eine Stützeinrichtung gehaltenen Siebaufbau verbunden ist, der bei einer Rotation der Grundplatte eine Taumelbewegung bzw. eine Schwing- und Wurfbewegung durchführt. Verfahren zum Betreiben von Maschinen sind weiter aus US 5 789 678 A, US 6 135 682 A und US 5 221 185 A bekannt. Durch die taumelnde Bewegung der Siebmaschinen entstehen Schwingungen, die sich auf den Boden und damit auf das Gebäude, in dem die Maschinen aufgestellt sind, übertragen. Diese Schwingungen können das Gebäude stark belasten und zu Rissen oder anderen Beschädigungen der Bausubstanz führen. Dies ist insbesondere dann problematisch, wenn die Maschinen nicht im Erdgeschoss des Gebäudes aufgestellt werden können, da die Schwingungen des Gebäudes mit zunehmender Höhe größer werden. Es ist daher notwendig, die von den Siebmaschinen verursachten Schwingungen des Bodens bzw. des Gebäudes zu minimieren.

Durch das Vorsehen von Gegengewichten wird einerseits versucht, die Amplitude bzw. die Stärke der Schwingungen der Maschinen zu verringern. Andererseits werden die Maschinen häufig auf einem gedämpften Sockel angeordnet, der die Übertragung der Schwingungen der Maschinen auf den Boden bzw. das Gebäude reduzieren soll. Eine vollständige Unterdrückung der Schwingungen ist jedoch nicht möglich.

Wird in einem Gebäude bzw. in einem Gebäudeteil lediglich eine einzelne Maschine angeordnet, kann durch eine Messung der Bewegung bzw. der Schwingung dieser Maschine leicht auf die zu erwartende Belastung des Gebäudes geschlossen werden. Die Amplitude einer Schwingung eines Gebäudeteils wird immer geringer als die Schwingung der Maschine sein, sofern die Frequenz der Bewegung der Maschine so gewählt ist, dass diese keiner Resonanzfrequenz bzw. Eigenfrequenz des Gebäudes entspricht. Die Frequenz einer periodischen Bewegung entspricht dem Kehrwert der Periodendauer der Bewegung. Würde man als Frequenz der Bewegung der Maschine eine Resonanzfrequenz des Gebäudes wählen, so würde sich die Amplitude der Schwingung des Gebäudes verstärken, möglicherweise auch über die Amplitude der Schwingung der Maschine hinaus, wodurch erhebliche Schäden am Gebäude entstehen können. Daher wird die Soll-Bewegungsfrequenz einer Maschine in der Regel so gewählt, dass diese keiner Resonanzfrequenz bzw. Eigenfrequenz des Gebäudes entspricht.

Werden in einem Gebäude bzw. in einem Gebäudeteil mehrere Maschinen angeordnet, überlagern sich die erzeugten Schwingungen. Die maximale Amplitude der überlagerten Schwingung ist dabei gleich der Summe der maximalen Amplituden der einzelnen Schwingungen. Die tatsächliche Amplitude der überlagerten Schwingung ist dabei nicht nur von den Amplituden der einzelnen Schwingungen, sondern auch von deren Frequenzen und Phasenlagen zueinander abhängig. Werden beispielsweise zwei gleichartige Maschinen mit gleicher Frequenz betrieben, so dass diese Schwingungen gleicher Frequenz und Amplitude erzeugen, wird die Stärke der Schwingung des Gebäudes davon abhängen, ob die Bewegungen der Maschinen gleichphasig oder gegenphasig sind. Sind die Bewegungen der Maschinen gleichphasig, das heißt die Phasendifferenz beträgt 0 bzw. ein ganzzahliges Vielfaches von 2π im Bogenmaß, so ist die Amplitude der resultierenden überlagerten Schwingung maximal und gleich der Summe der Amplituden der einzelnen Schwingungen. Sind die Bewegungen der Maschinen hingegen gegenphasig, das heißt die Phasendifferenz beträgt π bzw. (2n+1)π im Bogenmaß, wobei n eine ganze Zahl ist, so ist die Amplitude der resultierenden Schwingung minimal und gleich der Differenz der Amplituden der einzelnen Schwingungen.

Da in der Regel die Bewegungen der Maschinen unabhängig voneinander gesteuert und angetrieben werden, ist die Phasenlage der Bewegungen im Prinzip zufällig, so dass insbesondere bei einer größeren Anzahl von Maschinen davon auszugehen wäre, dass die auf das Gebäude einwirkende überlagerte Schwingung unterhalb der theoretisch maximal möglichen Amplitude liegt.

Jedoch wird dadurch zum einen eine zufällige gleichphasige Bewegung zweier oder mehrerer Maschinen nicht ausgeschlossen, zum anderen könnten sich die Bewegungen der Maschinen durch eine schwache Kopplung der Maschinen über den gemeinsamen Boden synchronisieren. Dieser Effekt ist als Synchronisation schwach gekoppelter Oszillatoren bekannt.

Des Weiteren kann sich die Phase einer Bewegung einer Maschine durch schwankende Arbeitsbelastung verschieben. Beispielsweise kann sich die Phase der Bewegung einer Taumelsiebmaschine durch das Einbringen von zu siebendem Material verschieben.

Es ist demnach eine Aufgabe der Erfindung ein Verfahren zum Betrieb von mehreren gemeinsam auf einem Boden eines Gebäudes angeordneten schwingenden und/oder taumelnden Siebmaschinen mit periodisch bewegten Sieben bereitzustellen, mit dem die Amplitude einer durch die Maschinen auf einen Gebäudeteil übertragenen Schwingung reduziert werden kann.

Gelöst wird die Aufgabe durch ein Verfahren zum Betreiben von gemeinsam auf einem Boden eines Gebäudes angeordneten schwingenden und/oder taumelnden Siebmaschinen mit beweglichen Sieben wobei diese periodisch mit im Wesentlichen gleicher Frequenz bewegt werden, wobei die Phasenlage einer Schwingung einer Siebmaschine in Bezug zur Phasenlage einer Schwingung einer weiteren Siebmaschine durch Verschieben der Phasenlagen gegeneinander so geregelt wird, dass die Amplitude einer Schwingung eines Strukturteils, unter einem vorgegebenen Maximalwert bleibt, wobei das Strukturteil der Boden ist, auf dem die Siebmaschinen angeordnet sind. Der vorgegebene Maximalwert für die Schwingung eines Strukturteils wird durch Berechnung oder Versuche so bestimmt, dass eine Schädigung der Struktur vermieden werden kann. Im Fall eines Gebäudes als Struktur wird der vorgegebene Maximalwert so gewählt, dass beispielsweise das Entstehen von Rissen in Wänden oder Böden sicher vermieden werden kann. Des Weiteren ist es in einer Ausführungsform denkbar, die Phasenlagen so zu regeln, dass die Schwingung eines oder mehrerer Strukturteile minimiert wird.

In einer Ausführungsform des Verfahrens ist das Strukturteil, dessen Schwingung unter einem vorgegebenen Maximalwert bleiben soll, der Träger, auf dem die Maschinen angeordnet sind. Der Träger ist erfindungsgemäß ein Boden eines Gebäudes. Die Maschinen sind erfindungsgemäß Siebmaschinen. Die beweglichen Teile sind erfindungsgemäß Siebe. Im Falle eines Bodens eines Gebäudes als Träger kann dieser insbesondere dann, wenn die Maschinen nicht im untersten Stockwerk eines Gebäudes angeordnet sind, starke Schwingungen, d.h. Schwingungen mit großer Amplitude, ausführen, was zum Auftreten von Rissen führen kann. Des Weiteren kann der Boden die Schwingungen auf weitere Gebäudeteile, andere Strukturteile oder andere Einrichtungen des Gebäudes übertragen, so dass eine Begrenzung der Schwingungen des Bodens auch aus diesen Gründen vorteilhaft ist.

In einer weiteren Ausführungsform des Verfahrens sind die Maschinen schwingungsgedämpft auf dem Träger angeordnet.

Die schwingungsgedämpfte Anordnung der Maschinen stellt zusätzlich zu der Regelung der Phasenlagen eine weitere Möglichkeit dar die Schwingungen, die von den Maschinen auf das Gebäude übertragen werden, zu reduzieren. Aufgrund des in der Regel hohen Gewichts der Maschinen ist es dabei bevorzugt, jede Maschine auf einem eigenen Fundament anzuordnen. Ein geeignetes Fundament besteht beispielsweise aus mehreren in Beton eingegossenen Stahlplatten, wobei zwischen dem Fundament und der Maschine eine Dämpfungsplatte eingesetzt wird. Gegebenenfalls wird zwischen der Dämpfungsplatte und der Maschine noch eine Lastverteilungsplatte eingesetzt, um die Dämpfungsplatte nicht punktförmig, sondern über eine große Fläche verteilt mit dem Gewicht der Maschine zu belasten. Die Dämpfungsplatte besteht bevorzugt aus einem elastischen Material, wobei die Eigenschaften wie Dicke und Härte des Materials so gewählt werden, dass die Schwingungsdämpfung maximal wird. Als Grundlage für diese Auswahl kann beispielsweise eine Finite-Elemente-Simulation des schwingenden Systems dienen.

In einer Ausführungsform des Verfahrens erfolgt das Regeln der Phasenlage durch Verschieben der Phase der Schwingung einer Maschine in Bezug zu einer weiteren Maschine, wobei das Verschieben der Phasenlage der Bewegung einer Maschine durch zeitweises Erhöhen oder Absenken der Frequenz der Bewegung der Maschine erfolgt.

Eine Phasendifferenz der Schwingung einer Maschine in Bezug zu einer weiteren Maschine kann über einen Phasenwinkel ausgedrückt werden, wobei bei einer Winkeldifferenz von π im Bogenmaß die Schwingungen genau gegenläufig sind und bei einer Winkeldifferenz von 0 die Bewegungen gleichläufig sind. Führen beispielsweise beide Maschinen eine Kreisbewegung aus, wobei die Schwingung von einer Unwucht der Maschine verursacht wird, zeigen bei einer Winkeldifferenz von 0 (0°) die Unwuchten in die gleiche Richtung und bei einer Winkeldifferenz von π (180°) in entgegengesetzte Richtungen. Die Winkeldifferenz kann durch kurzeitiges Anheben oder Absenken der Bewegungsfrequenz einer der Maschinen geändert werden. Bei einer geringfügigen Anhebung beispielsweise dreht sich die Unwucht einer Maschine nun schneller als die der anderen Maschine, die Differenz der Phasenwinkel ändert sich entsprechend. Angenommen zu Beginn der Frequenzerhöhung betrug die Winkeldifferenz 0, eilt nun die Bewegung der einen Maschine der der anderen zunehmend voraus. Wird nach Erreichen der gewünschten Winkeldifferenz, beispielsweise π, so dass die Bewegungen entgegengesetzt sind, die Geschwindigkeit bzw. Frequenz wieder angeglichen, bleibt diese Differenz unter der Bedingung, dass die Bewegungsfrequenzen genau gleich sind, erhalten.

Bevorzugt wird für das Regeln der Phasenlage die Bewegungsfrequenz einer Maschine nur geringfügig variiert, um die Prozessparameter, mit denen die Maschinen arbeiten, möglichst stabil zu halten.

In einer Ausführungsform der Erfindung werden die Maschinen über einen elektrischen Antrieb betrieben, der über einen Frequenzumrichter angesteuert wird. Eine Änderung der Frequenz der Bewegung einer Maschine kann dann durch Steuern des Frequenzumrichters erfolgen. Weitere Steuerungskomponenten innerhalb der Maschine sind in dieser Ausführungsform nicht erforderlich.

In einer Ausführungsform der Erfindung werden die Amplitude und/oder die Phase der Schwingung eines Strukturteils und/oder der Maschinen gemessen und bei der Regelung der Phasenlagen der Schwingungen der Maschinen zueinander berücksichtigt.

Beispielsweise können in den Maschinen Drehzahlsensoren angeordnet werden, mit denen die aktuelle Frequenz der Bewegung bestimmt werden kann. Beispielsweise ist der Drehzahlsensor als Keyphasor ausgeführt, bei dem eine Markierung auf der Drehachse überwacht wird und bei jeder Umdrehung ein Puls abgegeben wird. Mit diesem kann auch prinzipiell die Phasenlage der Bewegung der Maschine bestimmt werden, da der Puls vom Sensor immer bei gleicher Ausrichtung der Drehachse abgegeben wird. Diese Phase stimmt jedoch nicht notwendigerweise mit der Phase der von der Maschine erzeugten und auf den Träger übertragenen Schwingung überein. Die Phase der Schwingung ist beispielsweise bei einer Kreisbewegung von der Position der Unwucht abhängig und ändert sich bei einer Verschiebung der Unwucht. Bevorzugt wird die Messung der Drehzahl zur Bestimmung bzw. Überwachung der Bewegungsfrequenz der Maschinen eingesetzt.

Des Weiteren können im Bereich der Maschinen oder an anderen Stellen am Träger bzw. an einem Strukturteil Beschleunigungssensoren angeordnet werden, aus deren Signal die Schwingungsamplitude und deren zeitlicher Verlauf abgeleitet werden können. Aus dem zeitlichen Verlauf wiederum kann beispielsweise durch Ermitteln der Maxima und Minima auf die Phasenlage geschlossen werden. Insbesondere können die Beschleunigungssensoren am Boden eines Gebäudes angeordnet werden, um dessen Schwingung zu messen.

In einer Ausführungsform des Verfahrens wird die Amplitude der Schwingung des Trägers gemessen und bei Überschreitung eines vorgegebenen Grenzwertes, der unterhalb des für die Schwingung des Strukturteils vorgegebenen Maximalwertes liegt, die Phasenlage der Bewegung einer Maschine geändert.

Der Grenzwert wird so vorgegeben, dass auch bei einer geringen Überschreitung eine schädigende Wirkung der Schwingungen noch sicher ausgeschlossenen werden kann und liegt unter dem vorgegebenen Maximalwert. Wird eine Überschreitung dieses Grenzwertes festgestellt, weil beispielsweise zwei Maschinen Schwingungen mit gleicher Phasenlage auf den Träger oder auf ein anderes Strukturteil übertragen, wird die Phasenlage der Bewegung einer Maschine geändert. Dazu wird die Frequenz der Bewegung einer der Maschinen geringfügig angehoben oder abgesenkt. Sinkt die gemessene Amplitude der Schwingung des Trägers wieder unter den Grenzwert, wird die Bewegungsfrequenz wieder auf den ursprünglichen Wert eingestellt und stabil gehalten. Durch das Verändern der Bewegungsfrequenz ändert sich die Phasenlage der Bewegung der Maschinen zueinander und auch die Lage der Unwucht der einen Maschine in Bezug zu der anderen Maschine wird verändert.

Diese Ausführungsform des Verfahrens ist insbesondere dann vorteilhaft, wenn sich die Lage der Unwucht in der Maschine verändern kann, da für die Regelung die genaue Position der Unwucht weder bekannt noch konstant sein muss. Die Lage der Unwucht kann beispielsweise durch das Einbringen von zu behandelnden Materialien in die Maschinen verändert werden.

In einer weiteren Ausführungsform des Verfahrens wird für jede Maschine eine Soll-Phasenlage vorgegeben und die Phasenlage der Schwingung einer Maschine wird auf die Soll-Phasenlage geregelt, wobei die Soll-Phasenlagen so gewählt werden, dass eine Schwingung eines Strukturteils minimiert wird.

Bei dieser Ausführungsform ist es vorteilhaft, wenn sich die Lage einer in der jeweiligen Maschine vorhandenen Unwucht nicht oder nur geringfügig während des Betriebs verschiebt und somit die Phasenlage der auf den Boden übertragenen Schwingung immer in einem festen Bezug zu der Phasenlage der Bewegung der Maschine steht.

Die Lage der Unwucht muss für diese Form der Regelung bestimmt werden. Die Lage kann aus Messungen der Schwingungen der Maschine abgeleitet werden. Weicht die ermittelte Phasenlage von der vorgegebenen Soll-Phasenlage ab, wird wie bereits beschrieben die Bewegungsfrequenz der betreffenden Maschine geringfügig erhöht oder abgesenkt. Nach Erreichen der Soll-Phasenlage wird die ursprüngliche Bewegungsfrequenz wieder eingestellt.

In einer weiteren Ausführungsform der Erfindung, bei der die Phasenlage bei zwei Maschinen geregelt wird, wird die Soll-Phasenlage der ersten Maschine auf 0 (bzw. 0°) festgelegt und die Soll-Phasenlage der zweiten Maschine auf π (bzw. 180°) abzüglich der Phasendifferenz, die sich aus der Laufzeit der Schwingung von der zweiten Maschine zur ersten Maschine ergibt, festgelegt.

Durch die Berücksichtigung der Laufzeiten der Schwingung bei der Vorgabe der Phasendifferenz wird erreicht, dass die Phasen der einzelnen Schwingungen trotz der durch die Laufzeit bedingten Phasenverschiebung genau gegenläufig eingestellt werden.

In einer weiteren Ausführungsform des Verfahrens werden die vorgegebenen Soll-Phasenlagen numerisch oder analytisch berechnet, wobei der Abstand der Maschinen zueinander, die Anordnung der Maschinen zueinander, die Schwingungsdämpfung der Maschinen, die Dämpfung des Bodens, die Resonanzfrequenzen von Strukturteilen und der Maschinen, eine SollFrequenz der Bewegung der Maschinen oder einer Kombination von mindestens zweier dieser Parameter berücksichtigt wird.

Beispielsweise eignet sich für die Berechnung ein numerisches Verfahren basierend auf einer Finite-Elemente-Simulation.

In einer Ausführungsform des Verfahrens erfolgt Regelung der Bewegung der Maschinen unter Vermeidung von Frequenzen, die einer Resonanzfrequenz eines Strukturteils oder einer Maschine entsprechen.

Sollte eine Maschine mit einer Bewegungsfrequenz betrieben werden, die einer Resonanzfrequenz eines Strukturteils oder einer Maschine entspricht können Schwingungen mit großer Amplitude auf dieses Teil bzw. auf diese Maschine übertragen werden. Daher werden zum einen die Soll-Bewegungsfrequenzen der Maschinen so vorgegeben, dass diese keiner Resonanzfrequenz entsprechen. Zum anderen wird bei einer Erhöhung oder Verringerung der Bewegungsfrequenz, um beispielsweise die Phasenlage zu verändern, ebenfalls die eingestellte Frequenz so gewählt, dass diese keiner Resonanzfrequenz entspricht.

In einer Ausführungsform des Verfahrens werden mit diesem zwischen 2 und 36 Maschinen gleichzeitig betrieben.

In einer Ausführungsform der Erfindung wird das Verfahren mit Hilfe einer softwareprogrammierbaren Steuerung ausgeführt. Diese softwareprogrammierbare Steuerung (SPS) wird mit sämtlichen Maschinen und Sensoren verbunden. Abhängig von den Eingabewerten der Sensoren kann dann von der SPS entschieden werden, ob und was für eine Regelmaßnahme erforderlich ist. Gegebenenfalls kann die SPS auch so ausgeführt sein, dass bei einer Überschreitung des vorgegebenen Maximalwerts einer Schwingung eines Strukturteils auch eine Abschaltung einer oder mehrerer der angeschlossenen Maschinen erfolgt.

In einer Ausführungsform der Erfindung sind die mit dem Verfahren betriebenen Maschinen, schwingende und/oder taumelnde Siebmaschinen und die beweglichen Teile sind bewegliche Siebe dieser Maschinen.

In einer Ausführungsform des Verfahrens werden mit den Siebmaschinen, Polymere, beispielsweise Polyacrylate, Sand, Kies, Tee oder Gewürze verarbeitet.

Anhand der Zeichnungen wird die Erfindung nachstehend eingehender beschrieben.

Es zeigt:
- Figur 1: zwei gemeinsam auf einem Träger angeordnete Siebmaschinen,
- Figur 2: Amplituden zweier gleichphasiger Schwingungen und deren Summe und
- Figur 3: Amplituden zweier gegenphasiger Schwingungen und der Summe.

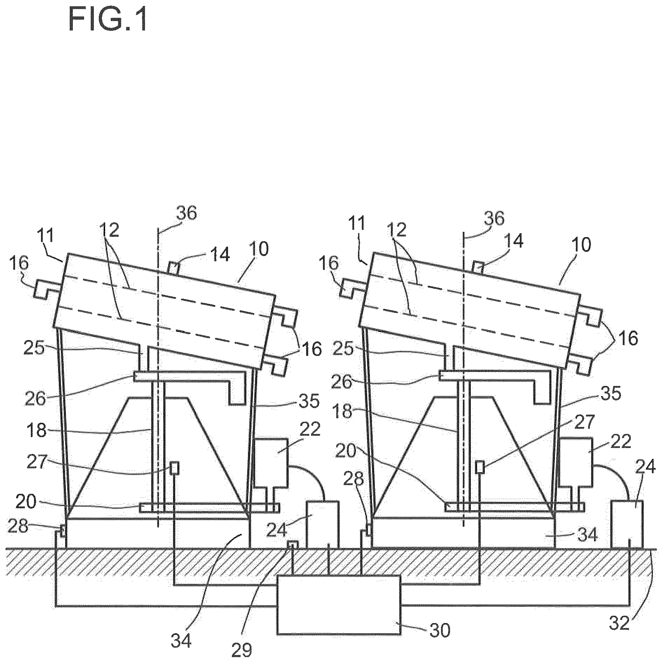

In Figur 1 sind zwei Taumelsiebmaschinen von der Seite dargestellt, die gemeinsam auf einem Träger angeordnet sind.

Figur 1 zeigt zwei Taumelsiebmaschinen 10 die gemeinsam auf einem Boden 32 als Träger angeordnet sind. Jede der Taumelsiebmaschinen 10 umfasst einen Siebaufbau 11, der in der in Figur 1 dargestellten Ausführungsform zwei Siebe 12 umfasst. Der Siebaufbau 11 besitzt eine darüber angeordnete Materialaufgabe 14, über die zu siebendes Material eingegeben werden kann. Das Material durchläuft den Siebaufbau 11 von oben nach unten, wobei jeweils Teile des Materials durch die Siebe 12 abgetrennt werden. Die einzelnen getrennten Fraktionen können über die drei seitlich angeordneten Austragsstellen 16 entnommen werden, wobei die Fraktionen mit jedem durchlaufenen Sieb 12 feiner werden. Der Siebaufbau 11 wird über Halterungen 35 abgestützt.

Zur Unterstützung des Materialtransports kann der Siebaufbau 11 in eine taumelnde Bewegung versetzt werden. Dazu ist der Siebaufbau 11 über eine drehbare Halterung 25 mit einem Exzenter 26 verbunden. Der Exzenter 26 wiederum kann über eine Antriebswelle 18 in Drehung versetzt werden. An der Antriebswelle 18 ist in der dargestellten Ausführungsform ein Drehzahlsensor 27 angeordnet, der pro Umdrehung einen Impuls an ein Steuergerät 30 sendet. Die Antriebswelle 18 ist über einen Riemen 20 mit einem Elektromotor 22 verbunden und wird über diesen angetrieben. Der Elektromotor 22 wird über einen Frequenzumrichter 24 angesteuert, wobei der Frequenzumrichter 24 mit dem Steuergerät 30 in Verbindung steht.

Die vom Siebaufbau 11 ausgeführte Bewegung ist periodisch, wobei eine Periodendauer der Zeitspanne einer Umdrehung der Antriebswelle 18 entspricht. Das zu siebende Material, welches an der Materialaufgabe 14 auf das oberste Sieb 12 gegeben wird, führt dabei eine elliptische Bewegung aus, ausgehend von der Mitte des Siebaufbaus 11. Die Verweilzeit des Materials im Siebaufbau 11 kann dabei durch Verstellen des Exzenters 26, des Neigungswinkels des Siebaufbaus 11 und der Periodendauer bzw. der Frequenz der Bewegung eingestellt werden.

Bei der Bewegung des Siebaufbaus 11 entstehen Schwingungen, da der Siebaufbau aufgrund des enthaltenen Materials nie vollständig ausgewuchtet werden kann. Diese Schwingungen werden über die Halterungen 35 und die Antriebswelle 18 auf den Boden 32 übertragen. Eine Schwingung des Bodens 32 ist jedoch unerwünscht, da dieser dadurch großen Belastungen ausgesetzt ist und die Schwingungen gegebenenfalls auf weitere Strukturteile wie andere Gebäudeteile oder auf andere Maschinen übertragen kann. Zur Dämpfung wird daher ein gedämpftes Fundament 34 zwischen dem Boden 32 und der Taumelsiebmaschine 10 angeordnet.

Trotz der Dämpfung durch das gedämpfte Fundament 34 werden immer Teile der Schwingungen der Taumelsiebmaschine 10 auf den Boden 32 übertragen. Diese Schwingungen des Bodens 32 können über einen Sensor 29 überwacht werden, der ebenfalls mit dem Steuergerät 30 verbunden ist. In dem Steuergerät 30 wird zudem ein Grenzwert für die Stärke bzw. die Amplitude der Schwingungen des Bodens 32 hinterlegt, bei dessen Überschreitung ein Eingreifen erfolgt. Eine solche Überschreitung deutet darauf hin, dass die einzelnen Schwingungen der beiden Taumelsiebmaschinen 10 gleichphasig sind und sich dadurch die Amplitude der Schwingung des Bodens 32 verstärkt.

Wird der vorgegebene Grenzwert der Schwingungen des Bodens 32 überschritten, wird durch das Steuergerät 30 einer der beiden Frequenzumrichter 24 angesteuert, um die Frequenz, mit der der Motor 22 angesteuert wird, zu verändern. Beispielsweise wird dazu die Frequenz erhöht. Dadurch wird die Bewegung, die der Siebaufbau 11 dieser Taumelsiebmaschine 10 ausführt, beschleunigt. Die Drehung der Unwucht dieser Maschine 10 ist nun schneller als die der anderen Maschine 10, die Differenz der Phasenwinkel der jeweiligen Schwingungen ändert sich entsprechend. Angenommen zu Beginn der Frequenzerhöhung betrug die Winkeldifferenz der beiden Schwingungen 0, eilt nun die Bewegung der einen Maschine 19 der der anderen zunehmend voraus. Wird nach Erreichen der gewünschten Winkeldifferenz, beispielsweise π, so dass die Bewegungen entgegengesetzt sind, die Geschwindigkeit bzw. Frequenz wieder angeglichen, bleibt diese Differenz unter der Bedingungen, dass die Bewegungsfrequenzen genau gleich sind, erhalten. Nach dem Eingriff durch das Steuergerät 30 sind die Schwingungen der beiden Taumelsiebmaschinen nun gegenphasig und die Amplitude der Gesamtschwingung ist nun deutlich reduziert und würde unter idealisierten Bedingungen 0 betragen.

In weiteren Ausführungsformen kann das Steuergerät 30 die Phasen der Schwingungen der jeweiligen Maschinen 10 auch aus den Messwerten der an den jeweiligen Maschinen 10 angeordneten Beschleunigungssensoren 28 ableiten. Anschließend kann das Steuergerät 30 durch kurzzeitiges Anheben ober Absenken der Bewegungsfrequenzen die Phasen der Schwingungen so einstellen, dass die Schwingung des Bodens 32 minimiert wird. Diese optimalen Phasen können beispielsweise vorab über eine Finite-Elemente-Simulation bestimmt und ebenfalls im Steuergerät 30 hinterlegt werden.

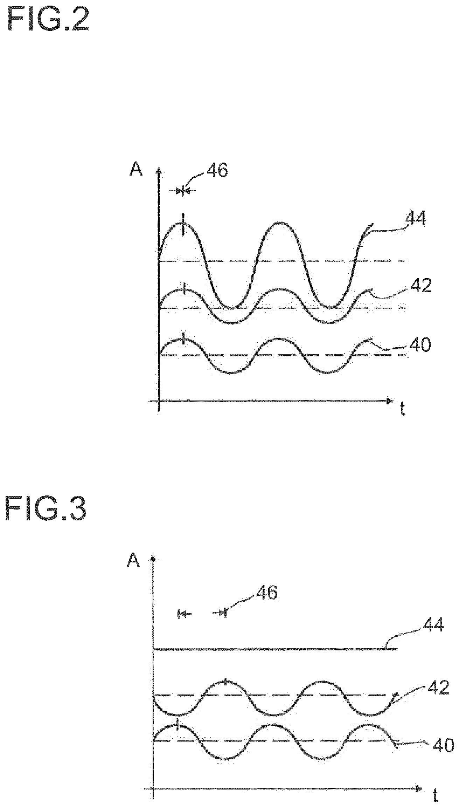

In Figur 2 sind die Amplituden zweier gleichphasiger Schwingungen und deren Summe dargestellt.

Figur 2 zeigt ein Diagramm bei dem auf der Y-Achse die Amplitude einer Schwingung und auf der X-Achse die Zeit aufgetragen ist. Aufgetragen sind in den Kurven 40 und 42 die jeweiligen Schwingungen zweier Taumelsiebmaschinen, die beispielsweise an deren Fundamenten gemessen wurden. Da die Phasendifferenz zwischen den beiden Schwingungen 0 ist, addieren sich die Amplituden und die Gesamtschwingung 44 besitzt eine doppelt so hohe Amplitude wie die der Schwingung einer der Maschinen. Zur besseren Darstellungen sind die jeweiligen Kurven auf der Y-Achse zueinander versetzt dargestellt.

In Figur 3 sind die Amplituden zweier gegenphasiger Schwingungen und deren Summe dargestellt.

Figur 3 zeigt ein Diagramm bei dem auf der Y-Achse die Amplitude einer Schwingung und auf der X-Achse die Zeit aufgetragen ist. Aufgetragen sind in den Kurven 40 und 42 die jeweiligen Schwingungen zweier Taumelsiebmaschinen, die beispielsweise an deren Fundamenten gemessen wurden. In der dargestellten Situation beträgt die Phasendifferenz zwischen den beiden Schwingungen π, so dass die Schwingungen gegenläufig sind. Bei der Gesamtschwingung 44 heben sich daher die beiden einzelnen Schwingungen auf und die Amplitude beträgt konstant 0. Zur besseren Darstellungen sind die jeweiligen Kurven auf der Y-Achse zueinander versetzt dargestellt.

### Bezugszeichenliste

- 10: Taumelsiebmaschine
- 11: Siebaufbau
- 12: Sieb
- 14: Materialaufgabe
- 16: Austragsstelle
- 18: Antriebswelle
- 20: Riemen
- 22: Motor
- 24: Frequenzumrichter
- 25: drehbare Halterung
- 26: Exzenter
- 27: Drehzahlsensor
- 28: Schwingungsmesser (Maschine)
- 29: Schwingungssensor (Boden)
- 30: Steuergerät
- 32: Boden
- 34: Sockel
- 35: Halterung
- 36: Achse
- 40: Schwingung 1. Maschine alleine
- 42: Schwingung 2. Maschine alleine
- 44: gesamte Schwingung
- 46: Differenz

- A: Amplitude
- t: Zeit

## Patentansprüche

1. Verfahren zum Betreiben von gemeinsam auf einem Boden (32) eines Gebäudes angeordneten schwingenden und/oder taumelnden Siebmaschinen (10) mit beweglichen Sieben, wobei diese periodisch mit im Wesentlichen gleicher Frequenz bewegt werden, **dadurch gekennzeichnet, dass** die Phasenlage einer Schwingung (40) einer Siebmaschine (10) in Bezug zur Phasenlage einer Schwingung (42) einer weiteren Siebmaschine (10) durch Verschieben der Phasenlagen gegeneinander so geregelt wird, dass die Amplitude einer Schwingung eines Strukturteils unter einem vorgegebenen Maximalwert bleibt, wobei das Strukturteil der Boden (32) ist, auf dem die Siebmaschinen (10) angeordnet sind.

2. Verfahren nach Anspruch 1, **dadurch gekennzeichnet, dass** die Maschinen schwingungsgedämpft auf dem Boden (32) angeordnet sind.

3. Verfahren nach Anspruch 1 oder 2, **dadurch gekennzeichnet, dass** die Phasenlage der Schwingung (40, 42) einer Siebmaschine (10) durch zeitweises Erhöhen oder Absenken der Frequenz der Bewegung der Siebmaschine (10) geregelt wird.

4. Verfahren nach Anspruch 3, **dadurch gekennzeichnet, dass** eine Änderung der Frequenz der Bewegung einer Siebmaschine (10) durch Steuern eines Frequenzumrichters (24) erfolgt.

5. Verfahren nach einem der Ansprüche 1 bis 4, **dadurch gekennzeichnet, dass** die Amplitude und/oder die Phase der Schwingung des Bodens (32) und/oder der Siebmaschinen (10) gemessen und bei der Regelung der Phasenlagen der Schwingung der Siebmaschinen (10) zueinander berücksichtigt wird.

6. Verfahren nach Anspruch 5, **dadurch gekennzeichnet, dass** die Amplitude der Schwingung des Bodens (32) gemessen wird und bei Überschreitung eines vorgegebenen Grenzwertes, der unterhalb des Maximalwertes liegt, die Phasenlage der Bewegung einer Siebmaschine (10) geändert wird.

7. Verfahren nach einem der Ansprüche 1 bis 6, **dadurch gekennzeichnet, dass** für jede Siebmaschine (10) eine Soll-Phasenlage vorgegeben wird und die Phasenlage der Schwingung (40, 42) einer Siebmaschine (10) auf die Soll-Phasenlage geregelt wird, wobei die Soll-Phasenlagen so gewählt werden, dass eine Schwingung des Bodens (32) minimiert wird.

8. Verfahren nach Anspruch 7, wobei die Phasenlage bei zwei Siebmaschinen (10) geregelt wird, **dadurch gekennzeichnet, dass** die Soll-Phasenlage der ersten Maschine 0 (0°) ist und die Soll-Phasenlage der zweiten Maschine π (180°) abzüglich der Phasendifferenz, die sich aus der Laufzeit der Schwingung von der zweiten Siebmaschine zur ersten Siebmaschine ergibt, beträgt.

9. Verfahren nach Anspruch 7, **dadurch gekennzeichnet, dass** die vorgegebenen Soll-Phasenlagen numerisch oder analytisch berechnet werden unter Berücksichtigung des Abstands der Maschinen (10) zueinander, der Anordnung der Siebmaschinen (10) zueinander, der Schwingungsdämpfung der Siebmaschinen (10), der Dämpfung des Bodens (32), der Resonanzfrequenzen des Bodens (32) und der Siebmaschinen (10), einer SollFrequenz der Bewegung der Siebmaschinen (10) oder einer Kombination von mindestens zweier dieser Parameter.

10. Verfahren nach einem der Ansprüche 1 bis 9, **dadurch gekennzeichnet, dass** die Regelung der Bewegung der Siebmaschinen (10) unter Vermeidung von Frequenzen erfolgt, die einer Resonanzfrequenz des Bodens (32) oder einer Siebmaschine (10) entsprechen.

11. Verfahren nach einem der Ansprüche 1 bis 10, **dadurch gekennzeichnet, dass** zwischen 2 und 36 Siebmaschinen (10) gleichzeitig betrieben werden.

12. Verfahren nach einem der Ansprüche 1 bis 11, **dadurch gekennzeichnet, dass** das Verfahren mit Hilfe einer softwareprogrammierbaren Steuerung (30) ausgeführt wird.

13. Verfahren nach einem der Ansprüche 1 bis 12, wobei mit den Siebmaschinen Polymere, Sand, Kies, Tee oder Gewürze verarbeitet werden.

## Claims

1. A method for operating oscillating and/or tumbling screening machines (10) having moving screens and arranged jointly on a floor (32) of a building, said screens being moved periodically with substantially the same frequency, wherein the phase of an oscillation (40) of one screening machine (10) in relation to the phase of an oscillation (42) of a further screening machine (10) is controlled by shifting the phases with respect to one another such that the amplitude of an oscillation of a structural part remains below a predefined maximum value, where the structural part is the floor (32) on which the screening machines (10) are arranged.

2. The method according to claim 1, wherein the machines are arranged on the floor (32) in an oscillation-damped manner.

3. The method according to claims 1 or 2, **characterized in that** the phase of the oscillation (40, 42) of a screening machine (10) is controlled by temporarily raising or lowering the frequency of the movement of the screening machine (10).

4. The method according to claim 3, wherein a change in the frequency of the movement of a screening machine (10) is made by controlling a frequency converter (24).

5. The method according to one of claims 1 to 4, wherein the amplitude and/or the phase of the oscillation of the floor (32) and/or of the screening machines (10) is measured and taken into account when controlling the phases of the oscillation of the screening machines (10) in relation to each other.

6. The method according to claim 5, wherein the amplitude of the oscillation of the floor (32) is measured and, if a predefined limiting value which lies below the maximum value is exceeded, the phase of the movement of a screening machine (10) is changed.

7. The method according to one of claims 1 to 6, wherein a phase set point is predefined for each screening machine (10), and the phase of the oscillation (40, 42) of a screening machine (10) is controlled to the phase set point, the phase set points being chosen such that an oscillation of the floor (32) is minimized.

8. The method according to claim 7, in which the phase in two screening machines (10) is controlled, wherein the phase set point of the first machine is 0 (0°), and the phase set point of the second machine is π (180°), minus the phase difference which results from the propagation time of the oscillation from the second screening machine to the first screening machine.

9. The method according to claim 7, wherein the predefined phase set points are calculated numerically or analytically, the distance of the machines (10) from one another, the arrangement of the screening machines (10) in relation to one another, the oscillation damping of the screening machines (10), the damping of the floor (32), the resonant frequencies of the floor (32) and the screening machines (10), a frequency set point of the movement of the screening machines (10) or of a combination of at least two of these parameters being taken into account.

10. The method according to one of claims 1 to 9, wherein the control of the movement of the screening machines (10) is carried out while avoiding frequencies which correspond to a resonant frequency of the floor (32) or of a screening machine (10).

11. The method according to one of claims 1 to 10, wherein between 2 and 36 screening machines (10) are operated simultaneously.

12. The method according to one of claims 1 to 11, wherein the method is implemented with the aid of a programmable logic controller (30).

13. The method according to one claims 1 to 12, wherein polymers, sand, gravel, tea or herbs or spices are processed with the screening machines.

## Revendications

1. Procédé permettant de faire fonctionner des machines de criblage (10) comportant des tamis mobiles à oscillation et/ou à culbutage disposées en commun sur un sol (32) d'un bâtiment, dans lequel lesdites machines sont déplacées de manière périodique sensiblement à la même fréquence, **caractérisé en ce que** la position de phase d'une oscillation (40) d'une machine de criblage (10) par rapport à la position de phase d'une oscillation (42) d'une autre machine de criblage (10) est régulée par décalage des positions de phase les unes par rapport aux autres de manière à ce que l'amplitude d'une oscillation d'une partie structurelle reste inférieure à une valeur maximale prédéterminée, dans lequel la partie structurelle est le sol (32) sur lequel sont disposées les machines de criblage (10).

2. Procédé selon la revendication 1, **caractérisé en ce que** les machines sont disposées sur le sol (32) avec amortissement des oscillations.

3. Procédé selon la revendication 1 ou 2, **caractérisé en ce que** la position de phase de l'oscillation (40, 42) d'une machine de criblage (10) est régulée par augmentation ou réduction dans le temps de la fréquence du mouvement de la machine de criblage (10).

4. Procédé selon la revendication 3, **caractérisé en ce qu'**une modification de la fréquence du mouvement d'une machine de criblage (10) est effectuée par commande d'un convertisseur de fréquence (24).

5. Procédé selon l'une quelconque des revendications 1 à 4, **caractérisé en ce que** l'amplitude et/ou la phase de l'oscillation du sol (32) et/ou des machines de criblage (10) est/sont mesurée(s) et est prise en compte lors de la régulation des positions de phase de l'oscillation des machines de criblage (10) les unes par rapport aux autres.

6. Procédé selon la revendication 5, **caractérisé en ce que** l'amplitude de l'oscillation du sol (32) est mesurée et **en ce que**, lorsqu'une valeur de seuil prédéterminée qui est supérieure à la valeur maximale est dépassée, la position de phase du mouvement d'une machine de criblage (10) est modifiée.

7. Procédé selon l'une quelconque des revendications 1 à 6, **caractérisé en ce que**, pour chaque machine de criblage (10), une position de phase théorique est prédéfinie et **en ce que** la position de phase de l'oscillation (40, 42) d'une machine de criblage (10) est régulée à la position de phase théorique, dans lequel les positions de phase théoriques sont sélectionnées de manière à minimiser une oscillation du sol (32).

8. Procédé selon la revendication 7, dans lequel la position de phase dans le cas de deux machines de criblage (10) est régulée, **caractérisé en ce que** la position de phase théorique de la première machine est égale à 0 (0°) et **en ce que** la position de phase théorique de la deuxième machine est égale à π (180°) après soustraction de la différence de phase qui résulte du temps de propagation de l'oscillation de la deuxième machine de criblage à la première machine de criblage.

9. Procédé selon la revendication 7, **caractérisé en ce que** les positions de phase théoriques prédéterminées sont calculées de manière numérique ou analytique en tenant compte de la distance entre les machines (10), de l'agencement des machines de criblage (10) les unes par rapport aux autres, de l'amortissement des oscillations des machines de criblage (10), de l'amortissement du sol (32), des fréquences de résonance du sol (32) et des machines de criblage (10), d'une fréquence théorique du mouvement des machines de criblage (10) ou d'une combinaison d'au moins deux desdits paramètres.

10. Procédé selon l'une quelconque des revendications 1 à 9, **caractérisé en ce que** la régulation du mouvement des machines de criblage (10) est effectuée en évitant les fréquences qui correspondent à une fréquence de résonance du sol (32) ou d'une machine de criblage (10).

11. Procédé selon l'une quelconque des revendications 1 à 10, **caractérisé en ce qu'**entre 2 et 36 machines de criblage (10) sont mises en fonctionnement.

12. Procédé selon l'une quelconque des revendications 1 à 11, **caractérisé en ce que** le procédé est mis en oeuvre à l'aide d'une unité de commande programmable par logiciel (30).

13. Procédé selon l'une quelconque des revendications 1 à 12, dans lequel des polymères, du sable, des graviers, du thé où des épices sont traités à l'aide des machines de criblage.
